# EUROPÄISCHE PATENTSCHRIFT

(11) **EP 1 630 480 B1**
(45) Veröffentlichungstag und Bekanntmachung des Hinweises auf die Patenterteilung: **05.10.2011**
(21) Anmeldenummer: 05016371.6
(22) Anmeldetag: 28.07.2005
(51) Int. Cl.: F24D 3/16, F24F 5/00

(54) **Strahlflächenaufbau**
Planar radiating structure
Structure de rayonnement plat

(30) Priorität: 23.08.2004 DE 202004013206 U
(43) Veröffentlichungstag der Anmeldung: 01.03.2006
(73) Patentinhaber: Frenger Systemen BV Heiz- und Kühltechnik GmbH, 64823 Gross-Umstadt (DE)
(72) Erfinder: Meng, Klaus, Dr., 64823 Gross - Umstadt (DE)
(74) Vertreter: KEIL & SCHAAFHAUSEN Patentanwälte

(56) Entgegenhaltungen:
- CH-A- 382 945
- DE-A1- 10 024 507
- DE-U- 1 740 169
- DE-U- 1 845 130
- DE-U1- 8 811 570
- NL-A- 9 002 091

## Beschreibung

Die Erfindung betrifft einen Strahlflächenaufbau zum Temperieren eines Raumes mit mehreren von einem Wärmeübertragungsmedium, wie Wasser oder Luft, zu durchströmenden Rohren eines Rohrregisters, die im Wesentlichen parallel zueinander angeordnet sind und jeweils einen Abstahlbereich aufweisen, der dem zu temperierenden Raum zugewandt ist.

Ein derartiger Strahlflächenaufbau ist aus der DE 100 24 507 A1 bekannt, wobei die Rohre in einer - aus der Sicht des zu temperierenden Raumes - konkav gekrümmten Ebene angeordnet sind. Dies verursacht jedoch bei der Herstellung auf konventionellen Produktionsstraßen Mehrkosten gegenüber ebenen Rohrregistern.

Herkömmliche Strahlflächenkonstruktionen, die üblicherweise zum Kühlen und/oder Heizen von Räumen, so auch von Hallen, eingesetzt werden, weisen in der Regel zu einem Rohrregister verbundene Rundrohre auf, die in einer horizontalen Ebene angeordnet sind, so dass ein flacher als Heiz- und/oder Kühldecke dienender Strahlflächenaufbau entsteht. Soll ein unter dem Stahlflächenaufbau gelegener Raum beheizt werden, so beträgt der Konvektionsanteil an der Gesamtwärmeabgabe des Strahlflächenaufbaus etwa 40%. Erwärmte Luft kann seitlich an dem Strahlflächenaufbau vorbei in den Deckenbereich des zu beheizenen Raumes oberhalb der Strahlflächenkonstruktion strömen, wodurch Heizenergie an die Umgebung des Raumes verloren geht.

Aus der DE 1 845 130 ist es bekannt, einen derartigen Strahlflächenaufbau mit zwei Schürzen aus zusätzlichen separaten Teilen zu versehen, die an einander gegenüberliegenden Seiten des Strahlflächenaufbaus angeordnet sind. Diese Schürzen sollen ein seitliches Vorbeiströmen von erwärmter Luft an dem Strahlflächenaufbau in darüber gelegenen Deckenbereich verringern. Diese Schürzen werden jedoch als optisch störend empfunden.

Zudem sind aus der DE 1 740 169 und der DE 88 11 570 U1 Deckenstrahlplatten bekannt, bei wechen die äußeren seitlichen Strahlflächen einen schräg nach unten geneigten Bereich und einen daran anschließenden, nach oben verlaufenden Randbereich aufweisen. Eine Wärmedämmung auf der dem zu beheizenden Raum abgewandten Seite der Rohre ist aus der DE 8811 570 U1 bekannt.

Weiter wird in der NL-A-9 002 091 ein Strahlflächenaufbau vorgeschlagen, bei welchem seitliche Abschlussbeche vorgesehen sind, die in Einbaulage nach unten den tiefsten Punkt des Aufbaus definieren. Die Rohre stehen dabei über die von den Strahlplatten definierte Ebene nach unten hervor.

Demgegenüber ist es die Aufgabe der vorliegenden Erfindung, einen Strahlflächenaufbau der eingangs genannten Art zu schaffen, der kostengünstig herstellbar ist, und bei dem die erbrachte Heizleistung im Aufenthaltsbereich unterhalb der Strahlplatten besser genutzt wird.

Dieser Aufgabe wird mit einem Strahlflächenaufbau nach Anspruch 1 gelöst. Hierbei liegen die Rohre in wenigstens einer nicht-gekrümmten Ebene, wobei die äußeren seitlichen Strahlplatten als Abschlussbleche einen Staurand bilden, der in Einbaulage nach unten verlaufend den tiefsten Punkt des Strahlflächenaufbaus definiert, und einen in Einbaulage im Wesentlichen vertikal nach oben verlaufenden Abschnitt aufweisen. Dieser erstreckt sich zumindest bis zu einer sich in Einbaulage oberhalb des Rohrregisters befindlichen Wärmedämmung, wobei die äußeren seitlichen Strahlplatten mit dem Staurand und/oder dem in Einbaulage im Wesentlichen vertikal nach oben verlaufenden Abschnitt gleichzeitig eine Halterung und/oder einen Sichtschutz für die Wärmedämmung bilden. Durch die Ausbildung eines Staurandes in den seitlichen Strahlplatten (Seitenpaneelen), der den in Einbaulage tiefsten Punkt des Strahlflächenaufbaus bildet, kann wirkungsvoll vermieden werden, dass an der Seite des Strahlflächenaufbaus erwärmte Luft in den über dem Stahlflächenaufbau gelegenen Deckenbereich entweicht. Die Konvektion an dem Strahlflächenaufbau kann zudem deutlich reduziert werden. Erfindungsgemäß sind die mittleren Strahlplatten durch zueinander in einem stumpfen Winkel verlaufende Bereiche gebildet, wobei die mittleren Strahlplatten in dem Abstrahlbereich über eine Klemmverbindung derart an den Rohren befestigt sind, dass die Rohre direkt mit dem zu temperierenen Raum in Kontakt stehen. Auf diese Weise wird auch die Temperaturverteilung an der Oberfläche des Strahlflächenaufbaus verbessert, wodurch die Gesamtstrahlungsleistung des Strahlflächenaufbaus erhöht wird. Die Beheizung eines Raumes mit einem derartigen Strahlflächenaufbau kann dadurch mit einem deutlich geringerem Wärmeverlust und entsprechend wirtschaftlicher erfolgen.

Der Staurand des Strahkflächenaufbaus bildet jedoch nicht nur den tiefsten Punkt des Strahlflächenaufbaus, sondern kann auch die bspw. oben auf die Rohre und/oder Strahlplatten aufgelegte Wärmedämmung halten, die heute in vielen Staaten vorgeschrieben ist. Die seitlichen Strahlplatten mit dem tiefgezogenen Staurand dienen somit gleichzeitig als Halter bzw. als Sichtschutz für die Wärmedämmung, durch die der Wärmeverlust weiter reduziert werden kann.

Der Staurand der äußeren seitlichen Strahlplatten kann in Einbaulage gegenüber der Horizontalen geneigt, insbesondere um etwa 20° bis etwa 70° gegenüber der Horizontalen geneigt, verlaufen, um so ein seitliches Entweichen erwärmter Luft zu vermeiden.

Nach einer weiteren Ausführungsform der Erfindung ist es auch möglich, zwischen den einzelnen Rohren Strahlplatten anzuordnen, die beispielsweise aus dünnem Blech gefertigt sind. Diese Strahlplatten liegen mit mindestens einer Randaufkantung zur Wärmeübertragung an den Rohren an. Mittlere Strahlplatten, die zwischen zwei Rohren angeordnet sind, weisen dabei an jeder Seite eine Randaufkantung auf, um sich zwischen den beiden Rohren zu erstrecken, während Randstrahlplatten (Seitenpaneele), die die Seitenkanten des Strahlflächenaufbaus definieren, lediglich eine Randaufkantung aufweisen, die an dem jeweils äußersten Rohr anliegt. Die Randaufkantungen umgreifen dabei vorzugsweise die Rohre zumindestens teilweise unter Freihaltung eines Abstrahlbereiches der Rohre zu dem zu temperierenden Raum hin, so dass einerseits ein guter Wärmeübergang zwischen den Strahlplatten und den Rohren stattfindet und andererseits auch ein direkter Wärmeübergang zwischen dem zu temperierenen Raum und den Rohren ermöglicht ist.

Vorzugsweise liegt die in Einbaulage untere Abschlussfläche der zwischen den äußeren seitlichen Strahlplatten angeordneten (mittleren) Strahlplatten im Wesentlichen in einer Ebene. Dabei kann die in Einbaulage untere Abschlussfläche der zwischen den äußeren seitlichen Strahlplatten angeordneten (mittleren) Strahlplatten auch über hierzu geneigt, insbesondere in einem stumpfen Winkel zueinander, verlaufende Bereiche mit den Rohren verbunden sein. Die Strahlplatten sind vorzugsweise unter Vorspannung ohne weitere Befestigungsmittel, d.h. selbstspannend, zwischen zwei Rohren festklemmbar. Alternativ hierzu können die Strahlplatten bspw. mittels Klammern, Federn oder dgl. an den Rohren gehalten sein.

Beilspielsweise zur Versteifung des erfindungsgemäßen Strahlflächenaufbaus kann die in Einbaulage untere Abschlussfläche der zwischen den äußeren seitlichen Strahlplatten angeordneten (mittleren) Strahlplatten profiliert sein und eine regelmäßige oder eine unregelmäßige Struktur aufweisen.

Es hat sich als besonders günstig herausgestellt, die Strahlplatten aus dünnem Blech zu fertigen, das vorzugsweise eine Stärke von etwa 0,4 und 2,0 mm aufweist. Die Strahlplatten können dabei aus Stahl, Kupfer oder Aluminium bestehen, die eine gute Wärmeleitfähigkeit bei gleichzeitiger hoher Steifigkeit gewährleisten.

Zusätzlich kann an der dem zu temperierenen Raum abgewandten Seite der Rohre eine Aufhängung vorgesehen sein, die es ermöglicht, den Strahlflächenaufbau, bspw. als eine Deckenheizung von einer Gebäude- oder Raumdecke herab aufzuhängen.

Wenn auf der dem zu temperierenden Raum abgewandten Seite der Rohre und/oder der Strahlplatten eine Wärmedämmung vorgesehen ist, die von einem sich in Einbaulage zumindest bereichsweise horizontal erstreckenden Abschnitt der äußeren seitlichen Strahlplatten umgriffen wird, ist eine besonders gute Halterung sowie Verkleidung der Wärmedämmung durch den erfindungsgemäßen Strahlflächenaufbau möglich.

Der sich horizontal erstreckende Abschnitt kann an den vertikal nach oben verlaufenden Abschnitt angrenzen und eine im Wesentlichen parallel zu den Rohren verlaufende Umkantung aufweist. Dabei wird es bevorzugt, wenn der Staurand, der sich horizontal erstreckende Abschnitt und der vertikal nach oben verlaufende Abschnitt einstückig ausgebildet sind.

Weiterbildungen, Vorteile und Anwendungsmöglichkeiten der Erfindung ergeben sich auch aus der nachfolgenden Beschreibung von Ausführungsbeispielen und der Zeichnung.

Es zeigen schematisch:
- Figur 1: eine Schnittdarstellung des erfindungsgemäßen Strahlflächenaufbaus nach einer ersten Ausführungsform, und
- Figur 2: eine Schnittdarstellung eines Strahlflächenaufbaus der nicht Teil der Erfindung ist

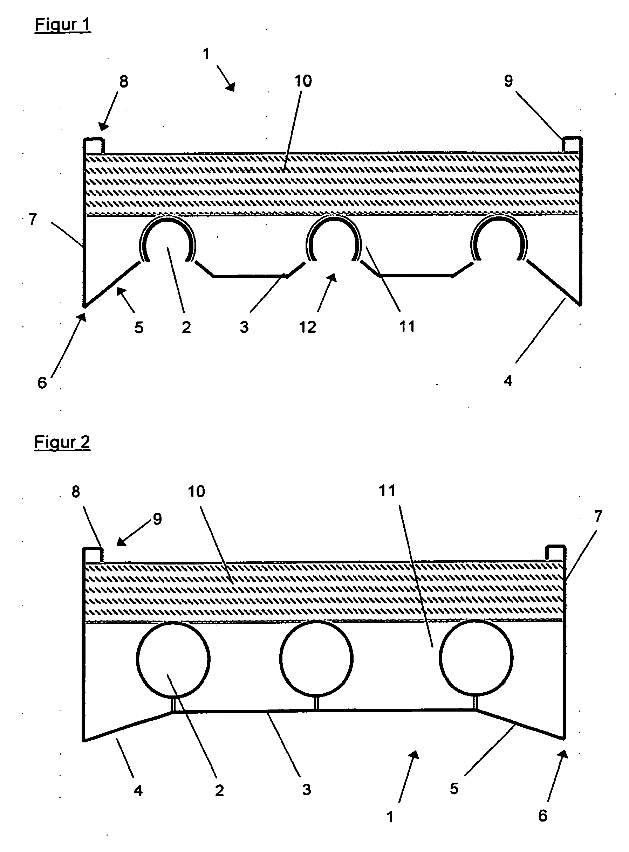

Der in Figur 1 gezeigte Strahlflächenaufbau 1 weist mehrere Rohre 2 auf, die im Wesentlichen parallel zueinander aneinanderliegend angeordnet sind. Die Rohre 2 sind im Wesentlichen in einer Ebene zu einem Rohrregister zusammengefaßt, wodurch eine kostengünstige Fertigung auf konventionellen Produktionsstraßen möglich ist. Das Rohrregister weist einen Zulauf für Heiz-oder Kühlmittel und einen entsprechenen Ablauf auf, so dass ein Wärmeübertragungsmedium das Rohrregister und die einzelnen Rohre 2 in bekannter Weise durchströmen kann.

Wie in der Schnittansicht von Figur 1 dargestellt, können die Rohre 2 als Rundrohre mit einem im Wesentlichen kreisförmigen Querschnitt ausgebildet sein, welche im Abstand voneinander liegen. Der Zwischenraum zwischen den Rohren 2 wird von (mittleren) Strahlplatten 3 überbrückt. Während diese Strahlplatten 3 jeweils zwischen zwei Rohren 2 angeordnet sind, liegen die beiden jeweils äußeren seitlichen Strahlplatten 4 (Seitenpaneele) jeweils nur an einem einzigen Rohr 2 an.

Die seitlichen Strahlplatten 4, die vorzugsweise einstückig sind, bilden einen Staurand 5, der sich in der in den Figuren gezeigten Einbaulage ausgehend von dem Rohr 2 gegenüber der Horizontalen geneigt nach unten erstreckt. Die untere Kante 6 des Staurandes 5 liegt dabei tiefer als die Abstrahlflächen bildenden Abschlussflächen der übrigen Strahlplatten 3, so dass der Strahlflächenaufbau 1 durch den Staurand 5 seitlich abgeschlossen wird. Anschließend an die untere Kante 6 des Staurandes 5 bilden die seitlichen Strahlplatten 4 einen im Wesentlichen vertikal nach oben verlaufenden Abschnitt 7, der sich bis über die Rohre 2 nach oben erstreckt. Von dem nach oben verlaufenden Abschnitt 7 ist ein horizontal verlaufender Abschnitt 8 abgewinkelt, der eine Umkantung 9 aufweist.

Auf der dem zu temperierenen Raum abgewandten Seite der Rohre 2 und der Strahlplatten 3 ist eine Wärmedämmung 10 vorgesehen, die eine Wärmeabstrahlung der Rohren 2 und der Strahlplatten 3, 4 auf der dem zu temperierenen Raum abgewandten Seite im Wesentlichen verhindert. Durch die nach oben bzw. horizontal verlaufenden Abschnitte 7, 8 der seitlichen Strahlplatten 4, die die Wärmedämmung 10 bereichsweise umgreifen, wird die Wärmedämmung 10 an den Rohren und/oder den Strahlplatten 3, 4 gehalten. Gleichzeit bilden die nach oben bzw. horizontal verlaufenden Abschnitte 7, 8 der seitlichen Strahlplatten 4 einen Sichtschutz, der die Wärmedämmung 10 verkleidet.

Wie aus den Figuren ersichtlich ist, weisen die Strahlplatten 3, 4 als Halterung an den Rohren 2 Randaufkantungen 11 auf, die im Wesentlichen an die Kontur des Rohres 2 angepaßt sind. Auf diese Weise umgreifen die Strahlplatten 3, 4 das Rohr 2 bereichsweise. Bei der Ausführungsform nach Figur 1 sind die (mittleren) Strahlplatten durch zueinander in einem stumpfen Winkel verlaufende Bereiche gebildet. Die mittleren Strahlplatten 3 können so unter Vorspannung ohne weitere Befestigungsmittel, d.h. selbstspannend, zwischen zwei Rohren 2 festgeklemmt werden.

Dagegen bilden die mittleren Strahlplatten 3 gemäß der in Figur 2 dargestellten Ausführungsform Abstrahlbereiche, die im Wesentlichen in eine Ebene liegen. Die Strahlplatten 3, 4 können hierbei an den Rohren 2 über eine geeignete Verbindung befestigt sein, beispielsweise durch Löten, Schweißen, Kleben oder mittels nicht gezeigter Klemm- und/oder Federelemente.

Die Strahlplatten 3, 4 sind dabei so an den Rohren 2 befestigt, dass auf der dem zu temperierenen Raum zugewandten Seite der Rohre 2 ein Abstrahlbereich 12 freigelassen ist, in welchem das Rohr 2 direkt mit dem zu temperierenen Raum in Kontakt steht. Auf diese Weise kann ein direkter Wärmeübergang zwischen dem von einem temperierenen Medium durchflossenen Rohr 2 und dem zu temperierenen Raum gewährleistet werden, der in den Figuren unterhalb des Strahlflächenaufbaus 1 gelegen ist.

Die Befestigung des Strahlflächenaufbaus 1 an einer Decke oder dgl. kann in geeigneter Weise über in den Figuren nicht dargestellte Querträger und/oder Aufhängungen erfolgen.

### Bezugszeichenliste:

- 1: Strahlflächenaufbau
- 2: Rohre
- 3: (mittlere) Strahlplatten
- 4: (seitliche) Strahlplatten
- 5: Staurand
- 6: untere Kante
- 7: nach oben verlaufender Abschnitt
- 8: horizontal verlaufender Abschnitt
- 9: Umkantung
- 10: Wärmedämmung
- 11: Randaufkantung
- 12: Abstrahlbereich

## Patentansprüche

1. Strahlflächenaufbau zum Temperieren eines Raumes, mit mehreren von einem Wärmeübertragungsmedium, wie Wasser oder Luft, zu durchströmenden Rohren (2) eines Rohrregisters, die im Wesentlichen parallel zueinander angeordnet sind und jeweils einen Abstrahlbereich (12) aufweisen, der dem zu temperierenden Raum zugewandt ist, wobei zwischen den Rohren (2) Strahlplatten (3, 4) vorgesehen sind, wobei die Rohre (2) in wenigstens einer nicht-gekrümmten Ebene liegen, und wobei die äußeren seitlichen Strahlplatten (4) als Abschlussbleche einen in Einbaulage im Wesentlichen vertikal nach oben verlaufenden Abschnitt (7) aufweisen, der sich zumindest bis zu einer sich in Einbaulage oberhalb der Rohre (2) befindlichen Wärmedämmung (10) erstreckt, wobei die äußeren seitlichen Strahlplatten (4) mit dem Staurand (5) und dem in Einbaulage im Wesentlichen vertikal nach oben verlaufenden Abschnitt (7) gleichzeitig eine Halterung und/oder einen Sichtschutz für die Wärmedämmung (10) bilden, und wobei die mittleren Strahlplatten (3) durch zueinander in einem stumpfen Winkel verlaufende Bereiche gebildet sind, **dadurch gekennzeichnet, dass** die äußeren seitlichen Strahlplatten (4) als Abschlussbleche einen Staurand (5) bilden, der in Einbaulage nach unten verlaufend den tiefsten Punkt (6) des Strahlflächenaufbaus (1) definiert, und dass die mittleren Strahlplatten (3) in dem Abstrahlbereich (12) über eine Klemmverbindung derart an den Rohren (2) befestigt sind, dass die Rohre (2) direkt mit dem zu temperierenen Raum in Kontakt stehen.

2. Strahlflächenaufbau nach Anspruch 1, **dadurch gekennzeichnet, dass** der Staurand (5) der äußeren seitlichen Strahlplatten (4) in Einbaulage gegenüber der Horizontalen geneigt, insbesondere um etwa 20° bis etwa 70° gegenüber der Horizontalen geneigt, verläuft.

3. Strahlflächenaufbau nach einem der vorhergehenden Ansprüche, **dadurch gekennzeichnet, dass** die in Einbaulage untere Abschlussfläche der zwischen den äußeren seitlichen Strahlplatten (4) angeordneten mittleren Strahlplatten (3) profiliert ist und eine unregelmäßige Struktur aufweist.

4. Strahlflächenaufbau nach einem der Ansprüche 1 oder 2, **dadurch gekennzeichnet, dass** die in Einbaulage untere Abschlussfläche der zwischen den äußeren seitlichen Strahlplatten (4) angeordneten mittleren Strahlplatten (3) profiliert ist und eine regelmäßige Struktur aufweist.

5. Strahlflächenaufbau nach einem der vorhergehenden Ansprüche, **dadurch gekennzeichnet, dass** die zwischen den Rohren (2) vorgesehenen Strahlplatten (3, 4) aus dünnem Blech bestehen und mit zumindest einer Randaufkantung (11) zur Wärmeübertragung an zumindest einem der Rohre (2) anliegen.

6. Strahlflächenaufbau nach Anspruch 5, **dadurch gekennzeichnet, dass** die Strahlplatten (3, 4) aus Stahl-, Kupfer- oder Aluminiumblech bestehen, das eine Dicke zwischen etwa 0,4 mm und 2,0 mm aufweist.

7. Strahlflächenaufbau nach einem der vorhergehenden Ansprüche, **dadurch gekennzeichnet, dass** auf der dem zu temperierenden Raum abgewandten Seite der Rohre (2) und/oder der Strahlplatten (3, 4) eine Wärmedämmung (10) vorgesehen ist, die von einem sich in Einbaulage zumindest bereichsweise horizontal erstreckenden Abschnitt (8) der äußeren seitlichen Strahlplatten (4) umgriffen wird.

8. Strahlflächenaufbau nach Anspruch 7, **dadurch gekennzeichnet, dass** der sich horizontal erstreckende Abschnitt (8) an den vertikal nach oben verlaufenden Abschnitt (7) angrenzt und eine im Wesentlichen parallel zu den Rohren (2) verlaufende Umkantung (9) aufweist.

9. Strahlflächenaufbau nach einem der Ansprüche 7 oder 8, **dadurch gekennzeichnet, dass** der Staurand (5), der sich horizontal erstreckende Abschnitt (8) und der vertikal nach oben verlaufende Abschnitt (7) einstückig ausgebildet sind.

10. Strahlflächenaufbau nach einem der vorhergehenden Ansprüche, **dadurch gekennzeichnet, dass** die Rohre (2) gegenüber den Strahlplatten (3, 4) in Richtung auf die dem zu temperierenden Raum abgewandten Seite zurückversetzt angeordnet sind.

## Claims

1. A radiating surface structure for purposes of controlling the temperature of a room, with a plurality of pipes (2) of a pipe matrix, through which is to flow a heat transfer medium, such as water or air, which pipes are arranged essentially parallel to one another and in each case have an emission region (12), which is facing towards the room whose temperature is to be controlled, wherein between the pipes (2) radiating panels (3, 4) are provided, wherein the pipes (2) lie in at least one non-curved plane, and wherein the outer lateral radiating panels (4) have as termination panels an essentially vertical section (7) running upwards in the installed position, which extends at least as far as thermal insulation (10) located above the pipes (2) in the installed position, wherein the outer lateral radiating panels (4) with the baffle edge (5) and the section (7) running essentially vertically upwards in the installed position at the same time form a mounting and/or screen for the thermal insulation (10), and wherein the central radiating panels (3) are formed by regions running at obtuse angles relative to one another, **characterised in that** the outer lateral radiating panels (4) as termination panels form a baffle edge (5), which running downwards in the installed position defines the lowest point (6) of the radiating surface structure (1), and **in that** the central radiating panels (3) in the emission region (12) are attached via a clamping joint to the pipes (2) such that the pipes (2) are in immediate contact with the room whose temperature is to be controlled.

2. The radiating surface structure in accordance with claim 1, **characterised in that** the baffle edge (5) of the outer lateral radiating panels (4) in the installed position runs inclined relative to the horizontal, in particular runs inclined at approximately 20° to approximately 70° relative to the horizontal.

3. The radiating surface structure in accordance with one of the preceding claims, **characterised in that** the lower termination surface in the installed position of the central radiating panels (3) arranged between the outer lateral radiating panels (4) is profiled and has an irregular structure.

4. The radiating surface structure in accordance with one of the claims 1 or 2, **characterised in that** the lower termination surface in the installed position of the central radiating panels (3) arranged between the outer lateral radiating panels (4) is profiled and has a regular structure.

5. The radiating surface structure in accordance with one of the preceding claims, **characterised in that** the radiating panels (3, 4) provided between the pipes (2) consist of thin sheet and with at least one edge upturn (11) abut against at least one of the pipes (2) for purposes of heat transfer.

6. The radiating surface structure in accordance with claim 5, **characterised in that** the radiating panels (3, 4) consist of steel, copper or aluminium sheet, which has a thickness of between approximately 0.4 mm and 2.0 mm.

7. The radiating surface structure in accordance with one of the preceding claims, **characterised in that** on the side of the pipes (2) and/or the radiating panels (3, 4) facing away from the room whose temperature is to be controlled, thermal insulation (10) is provided, which is surrounded by a section (8) of the outer lateral radiating panels (4) extending horizontally in the installed position in at least some regions.

8. The radiating surface structure in accordance with claim 7, **characterised in that** the section (8) extending horizontally adjoins the section (7) running vertically upwards, and has a lip (9) running essentially parallel to the pipes (2).

9. The radiating surface structure in accordance with one of the claims 7 or 8, **characterised in that** the baffle edge (5) of the section (8) extending horizontally and the section (7) running vertically upwards are integrally designed.

10. The radiating surface structure in accordance with one of the preceding claims, **characterised in that** the pipes (2) are arranged set back relative to the radiating panels (3, 4) in the direction towards the side facing away from the room whose temperature is to be controlled.

## Revendications

1. Agencement de surface rayonnante pour la thermorégulation d'un espace, comprenant plusieurs tuyaux (2) d'un registre de tuyaux, qui doivent être traversés par un fluide caloporteur, comme de l'eau ou de l'air, qui sont disposés principalement parallèlement les uns aux autres et présentent à chaque fois une zone de rayonnement (12), qui est tournée vers l'espace à thermoréguler, des plaques rayonnantes (3, 4) étant prévues entre les tuyaux (2), les tuyaux (2) étant situés dans au moins un plan non incurvé, et les plaques rayonnantes (4) latérales extérieures présentant comme tôles de fermeture une partie (7) agencée principalement verticalement vers le haut dans la position de montage, laquelle s'étend au moins jusqu'à une isolation thermique (10) se trouvant au-dessus des tuyaux (2) en position de montage, les plaques rayonnantes (4) latérales extérieures formant avec le bord de retenue (5) et la partie (7) s'étendant sensiblement verticalement vers le haut dans la position de montage formant en même temps un support et/ou une protection pour la vue pour l'isolation thermique (10), et les plaques rayonnantes (3) centrales étant formées par des zones agencées dans un angle obtus les unes par rapport aux autres, **caractérisé en ce que** les plaques rayonnantes (4) latérales extérieures forment comme tôles de fermeture un bord de retenue (5), qui définit dans la position de montage, s'étendant vers le bas, le point le plus bas (6) de la structure de surface rayonnante (1), et **en ce que** les plaques rayonnantes centrales (3) sont fixées dans la zone de rayonnement (12) au moyen d'une liaison de serrage sur les tuyaux (2), de telle sorte que les tuyaux (2) sont en contact directement avec l'espace à thermoréguler.

2. Structure de surface rayonnante selon la revendication 1, **caractérisée en ce que** le bord de retenue (5) des plaques de rayonnement (4) latérales extérieures est agencé de façon inclinée dans la position de montage par rapport à l'horizontale, en particulier d'environ 20° à environ 70° par rapport à l'horizontale.

3. Structure de surface rayonnante selon l'une quelconque des revendications précédentes, **caractérisée en ce que** la surface de fermeture, inférieure dans la position de montage, des plaques d'acier (3) centrales, disposées entre les plaques d'acier (4) latérales extérieures, est profilée et présente une structure irrégulière.

4. Agencement de surface rayonnante selon l'une quelconque des revendications 1 ou 2, **caractérisé en ce que** la surface de fermeture, inférieure dans la position de montage, des plaques de rayonnement (3) centrales, disposées entre les plaques rayonnantes (4) latérales extérieures, est profilée et présente une structure régulière.

5. Structure de surface rayonnante selon l'une quelconque des revendications précédentes, **caractérisée en ce que** les plaques rayonnantes (3, 4) prévues entre les tuyaux (2) sont à base de tôle mince et s'appliquent par au moins un placement sur chant de bord (11) pour la transmission de chaleur sur au moins l'un des tuyaux (2).

6. Structure de surface de rayonnement selon la revendication 5, **caractérisée en ce que** les plaques de rayonnement (3, 4) sont à base de tôle d'acier, de cuivre ou d'aluminium, qui présente une épaisseur comprise entre environ 0,4 mm et 2,0 mm.

7. Structure de surface de rayonnement selon l'une quelconque des revendications précédentes, **caractérisée en ce qu'**une isolation thermique (10), qui est entourée d'une partie (8), s'étendant au moins par endroits horizontalement dans la position de montage, des plaques rayonnantes (4) latérales extérieures, est prévue sur le côté, opposé à l'espace à thermoréguler, des tuyaux (2) et/ou des plaques rayonnantes (3, 4).

8. Structure de surface rayonnante selon la revendication 7, **caractérisée en ce que** la partie (8) s'étendant horizontalement est contiguë à la partie (7) agencée verticalement vers le haut et présente un bord retourné (9) agencé principalement parallèlement aux tuyaux (2).

9. Structure de surface rayonnante selon l'une quelconque des revendications 7 ou 8, **caractérisée en ce que** le bord de retenue (5), la partie (8) s'étendant horizontalement et la partie (7) agencée verticalement vers le haut sont conçus d'une seule pièce.

10. Structure de surface rayonnante selon l'une quelconque des revendications précédentes, **caractérisée en ce que** les tuyaux (2) sont disposés en retrait par rapport aux plaques rayonnantes (3, 4) en direction du côté opposé à l'espace à thermoréguler.
